# EUROPÄISCHE PATENTSCHRIFT

(11) **EP 0 403 941 B1**
(45) Veröffentlichungstag und Bekanntmachung des Hinweises auf die Patenterteilung: **10.08.1994**
(21) Anmeldenummer: 90111149.2
(22) Anmeldetag: 13.06.1990
(51) Int. Cl.: B60H 1/22, F01P 3/20, F01P 7/16

(54) **Fahrzeugheizung mit einem motorunabhängigen Heizgerät**
Automobile heating system with a heater independent of the engine
Chauffage pour véhicule avec dispositif de chauffage indépendant du moteur

(30) Priorität: 22.06.1989 DE 3920505
(43) Veröffentlichungstag der Anmeldung: 27.12.1990
(73) Patentinhaber: Firma J. Eberspächer, D-73730 Esslingen (DE)
(72) Erfinder: Humburg, Michael, D-7320 Göppingen-Jebenhausen (DE)

(56) Entgegenhaltungen:
- DE-A- 2 357 497
- FR-A- 2 639 009
- US-A- 4 010 895
- US-A- 4 394 960

## Beschreibung

Die Erfindung bezieht sich auf eine Fahrzeugheizung, aufweisend:
(a) ein Heizgerät, das durch Verbrennung von Brennstoff Wärme erzeugen und an einen flüssigen Wärmeträger abgeben kann;
(b) einen Wärmeträgerkreislauf mit:
   - einem Vorlauf, der von einem Antriebs-Verbrennungsmotor des Fahrzeugs zu dem Heizgerät und von dort zu einem Heizungswärmetauscher für den Fahrzeuginnenraum führt; und
   - einem Rücklauf, der von dem Heizungswärmetauscher zu dem Verbrennungsmotor führt, wobei
(c) der Wärmeträgerkreislauf eine Verbindungsleitung aufweist, die von dem Rücklauf zu dem zwischen dem Verbrennungsmotor und dem Heizgerät befindlichen, ersten Teil des Vorlaufs führt, so daß ein Kurzkreislauf gebildet ist, der unter Ausschluß des Verbrennungsmotors durch das Heizgerät und den Heizungswärmetauscher führt, und wobei
(d) für den ersten Teil des Vorlaufs oder den zweiten Teil des Rücklaufs, der sich zwischen der Abzweigung der Verbindungsleitung und dem Verbrennungsmotor befindet, ein strombetätigtes Ventil vorgesehen ist.

Bei herkömmlichen Fahrzeugheizungen dieser Art strömt der im Heizgerät erwärmte Wärmeträger durch den Heizungswärmetauscher und von dort - mit normalerweise noch sehr erheblichen Wärmeinhalt - durch den Verbrennungsmotor, ehe er wieder zur Eintrittsseite des Heizgeräts gelangt. Daraus ergibt sich zwar beispielsweise eine gute Vorwärmung des Verbrennungsmotors vor dem winterlichen Kaltstart. Andererseits kommt der Wärmeträger aufgrund erheblicher Wärmeverluste in Leitungen beträchtlicher Länge und aufgrund erheblicher Wärmeabgabe im Verbrennungsmotor stark abgekühlt zu dem Heizgerät zurück. Wenn nicht ein sehr groß dimensioniertes Heizgerät eingebaut ist, nehmen die sichere Enteisung des Fahrzeugs und die Erwärmung des Fahrzeuginnenraums auf eine angenehme Temperatur beträchtliche Zeit in Anspruch. In dieser Zeit wird wertvoller Strom aus der Fahrzeugbatterie verbraucht, ganz abgesehen von dem - normalerweise absolut gesehen sehr niedrigen - Brennstoffverbrauch des Heizgeräts in dieser Zeit. Ferner wird ein Großteil der möglichen Wärmeübertragungsleistung des Heizungswärmetauschers nicht genutzt, insbesondere bei tiefen Außentemperaturen, bei denen das Heizgerät den stark abgekühlten Wärmeträger nicht auf eine wünschenswert hohe Austrittstemperatur erwärmen kann.

Aus der Druckschrift US-A 4 394 960 ist eine Heizeinrichtung für Fahrzeuge mit einem Wärmeträgerkreislauf bekannt, bei dem zwischen dem Vorlauf der von dem Fahrzeugantriebsmotor zu einem Heizgerät, von dort zu einem Heizungswärmetauscher fürht und dem Rücklauf, der von dem Heizungswärmetauscher zum Fahrzeugantriebsmotor führt, eine Verbindungsleitung angeordnet ist, die von dem Rücklauf zu einem Abschnitt des Vorlaufs führt, der zwischen dem Fahrzeugantriebsmotor und dem Heizgerät liegt und in der Thermostate angeordnet sind, von denen einer den Kreislauf öffnet bei einer vorgegebenen Temperatur des Motorkühlmittels, während der andere Thermostat parallel hierzu schließt, um den Rücklauf über das Heizgerät zu sperren. Mit dieser Anordnung ist eine schnelle Aufheizung der Fahrerkabine möglich während der Zeit, in der sich das Kühlmittel des Motors erwärmt. Sobald das Kühlmittel des Motors die Wärmeversorgung auch der Fahrerkabine übernehmen kann, wird der Betrieb des Heizgerätes beendet. Damit bestimmt bei dieser bekannten Anordnung der Erwärmungszustand des Fahrzeugmotors, welcher Kreislauf geschaltet wird. Damit ist es nicht möglich, die Heizung unter umfassender Berücksichtigung der Betriebssituation zu betreiben.

Es ist auch die Möglichkeit beschrieben, statt der beiden Thermostatventile ein strombetätigtes Ventil vorzusehen.

Der Erfindung liegt die Aufgabe zugrunde, eine Fahrzeugheizung der eingangs genannten Art dahingehend auszubilden, daß die im Heizgerät an den Wärmeträger abgegebene Wärme in allererster Linie dem Fahrzeuginnenraum zugute kommt und hierbei die Wärmeübertragungsleistung des Heizungswärmetauschers möglichst weitgehend ausnutzbar ist.

Zur Lösung dieser Aufgabe ist die Fahrzeugheizung erfindungsgemäß dadurch gekennzeichnet,
(e) daß für das Heizgerät ein Steuergerät vorgesehen ist, das den Betrieb des Heizgeräts unter Berücksichtigung der im Wärmeträgerkreislauf hinter dem Heizgerät erfaßten Wärmeträgertemperatur steuert; und
(f) daß das strombetätigte Ventil durch das Steuergerät gesteuert ist.

Bei geschlossenem, strombetätigtem Ventil kommt somit der gesamte Wärmeinhalt des von dem Heizgerät kommenden Wärmeträgers - wenn man von den recht geringen Wärmeverlusten an die Umgebung in dem Kurzkreislauf absieht - dem Heizungswärmetauscher zugute. Erst wenn dieser das Wärmeangebot nicht mehr vollständig genug dem Fahrzeuginnenraum zuführen kann, also infolgedessen die Wärmeträgertemperatur austrittsseitig des Heizgeräts übermäßig ansteigt, öffnet das strombetätigte Ventil vollständig oder teilweise und gibt dadurch den Wärmeträger-Strömungsweg durch den Verbrennungsmotor frei. Es hat sich gezeigt, daß die hieraus resultierende, "beiläufige", intermittierende Erwärmung des Verbrennungsmotors in aller Regel für einen sicheren Kaltstart ausreicht. Moderne Verbrennungsmotoren kommen, sobald sie gestartet sind, sehr rasch auf ihre Betriebstemperatur. Der Fahrzeuginnenraum wird wesentlich rascher als bei bisherigen Fahrzeugheizungen im wünschenswerten Ausmaß erwärmt. Es werden der Brennstoffverbrauch des Heizgeräts und insbesondere der Stromverbrauch aus der Batterie des Fahrzeugs gesenkt.

Es wird darauf hingewiesen, daß es der Besitzer der Fahrzeugheizung insbesondere durch vorherige Wahleinstellung der Gebläsestufe des üblicherweise für den Heizungswärmetauscher vorgesehenen Gebläses in der Hand hat, ob er - bei hoch eingestellter Gebläsestufe - den Fahrzeuginnenraum besonders rasch erwärmen lassen und dem Verbrennungsmotor besonders wenig Wärme zukommen lassen will oder ob er - bei niedrig eingestellter Gebläsestufe - eine langsamere Erwärmung des Fahrzeuginnenraums und eine weitergehende Vorwärmung des Verbrennungsmotors vorzieht. Ferner wird die Möglichkeit genannt, die Einstellung der Gebläsestufe und/oder sogar die Stellung des strombetätigten Ventils von der über einen Temperaturfühler erfaßten Temperatur des Fahrzeuginnenraums abhängig zu machen. Dies führt dazu, daß bei ausreichend erwärmtem Fahrzeuginnenraum der Verbrennungsmotor einen größeren Anteil des Wärmeangebots abbekommt. Ein ähnlicher Effekt ergibt sich bei Heizungswärmetauschern bzw. Fahrzeugen, die mit einer Umluftstellung ausgestattet sind. In diesem Fall macht sich ein ausreichend erwärmter Fahrzeuginnenraum in einem geringer werdenden Wärmeentzug von dem Wärmeträger im Heizungswärmetauscher und einem sich demzufolge öffnenden, strombetätigten Ventil bemerkbar. Außerdem wird die Möglichkeit erwähnt, die Gebläsestufe oder direkt das strombetätigte Ventil von einer Zeitschaltuhr steuern zu lassen, die nach einer einstellbaren Zeit (die bei tiefen Außentemperaturen sinnvollerweise länger gewählt werden sollte als bei nicht so tiefer Außentemperatur) von der reinen Heizungswärmetauscher-Priorität auf Verbrennungsmotor-Miterwärmung umschaltet.

Der Wärmeträgerkreislauf kann eine Bypassleitung aufweisen, die von dem ersten Teil des Vorlaufs zu dem zwischen dem Heizgerät und dem Heizungswärmetauscher befindlichen, zweiten Teil des Vorlaufs führt. Hierdurch gestaltet sich bei einigen Fahrzeug-Wärmeträgerkreisläufen der Einbau des Heizgeräts einfacher. Außerdem muß das Heizgerät nicht im abgeschalteten Zustand und bei geöffnetem Zustrom von Wärmeträger zu dem Heizungswärmetauscher ständig durchströmt werden.

Für die erfindungsgemäße Fahrzeugheizung kommen eine ganze Reihe von Bauarten strombetätigter Ventile in Betracht. Besonders bevorzugt sind jedoch insbesondere wegen ihrer einfachen Bauart und ihres vergleichsweise geringen Preises Magnetventile. Im einfachsten und besonders bevorzugten Fall handelt es sich um ein strombetätigtes Ventil, vorzugsweise Magnetventil, mit nur zwei Stellungen, nämlich einer Offenstellung und einer Schließstellung. Es ist jedoch möglich, wie weiter vorn bereits angedeutet, ein strombetätigtes Ventil mit einer oder mehreren, vorgegebenen oder variablen Zwischenstellungen einzusetzen. Es ist möglich, ein strombetätigtes Ventil einzusetzen, das stromlos eine von zwei Stellungen hat und stromdurchflossen die andere der beiden Stellungen hat. Es ist aber auch möglich, ein doppeltwirkendes, strombetätigtes Ventil, vorzugsweise Magnetventil, vorzusehen, welches nur zum Umschalten von der einen in die andere Stellung Strom verbraucht.

Vorzugsweise erfolgt die Erfassung der Wärmeträgertemperatur durch einen dem Heizgerät ausgangsseitig zugeordneten Temperaturfühler.

Es gibt Heizgerät-Steuergeräte, die einen unteren, ersten Temperatur-Schaltpunkt und einen oberen, zweiten Temperatur-Schaltpunkt aufweisen. Herkömmlicherweise wird das Heizgerät am unteren Schaltpunkt von kleiner Leistung auf große Leistung umgeschaltet und am oberen Schaltpunkt von großer Leistung auf kleine Leistung umgeschaltet. Überlagert ist in der Regel eine Steuerung zum Abschalten des Heizgeräts bei übermäßig hoher Wärmeträgertemperatur oberhalb des oberen Schaltpunkts.

Bei der erfindungsgemäßen Fahrzeugheizung läßt sich vorzugsweise ein derartiges Steuergerät zum Umschalten des strombetätigten Ventils einsetzen. Hierbei kann das Steuersignal des Steuergeräts zum Umschalten von großer Heizleistung auf kleine Heizleistung zugleich dazu genutzt werden, das strombetätigte Ventil zu öffnen. Da jetzt dem Heizgerät Wärmeträger zuströmt, der aus von dem Heizungswärmetauscher zurückkommendem Wärmeträger und von dem Verbrennungsmotor kommendem, deutlich kälterem Wärmeträger gemischt ist, geht das Heizgerät nach sehr kurzer Zeit, insbesondere 15 bis 45 s, gesteuert von dem Steuergerät wieder auf große Leistung. Hierfür können Schaltglieder, insbesondere Magnetschalter, außerhalb des Steuergeräts erforderlich sein. Es ist jedoch bevorzugt, das Steuergerät so funktionsumfassend auszubilden, daß das strombetätigte Ventil, vorzugsweise Magnetventil, nur noch über Stromleitungen mit dem Steuergerät verbunden werden muß.

Unter wärmetechnischen Gesichtspunkten noch günstiger gestaltet sich die Fahrzeugheizung, wenn das Steuergerät eine oberhalb des beschriebenen zweiten Schaltpunkts liegenden, dritten Temperatur-Schaltpunkt aufweist. Dann wird nämlich das strombetätigte Ventil nicht zugleich mit dem Umschalten des Heizgeräts auf kleine Leistung geöffnet, sondern die Umschalttemperatur auf kleine Heizgerätleistung erst dann erreicht, wenn auch der vom Verbrennungsmotor zurückkommende Wärmeträger noch so warm ist, daß selbst durch den Heizungswärmetauscher und für die Vorwärmung des Verbrennungsmotors nicht das gesamte Wärmeangebot des in hoher Leistungsstellung arbeitenden Heizgeräts genutzt werden kann.

Eine bevorzugte Temperatur für den ersten Schaltpunkt liegt im Bereich von 67 bis 83 °C, besonders bevorzugt etwa 80 °C, und eine bevorzugte Temperatur für den zweiten Schaltpunkt liegt im Bereich von 77 bis 93 °C, besonders bevorzugt etwa 90 °C. Die Temperatur des dritten Schaltpunkts kann relativ dicht oberhalb des zweiten Schaltpunkts sein, besonders bevorzugt etwa 95 °C.

Die erfindungsgemäße Fahrzeugheizung eignet sich für mit einem Verbrennungsmotor ausgestattete Fahrzeuge vielerlei Art. Es kann sich um ein Landfahrzeug, ein Wasserfahrzeug oder ein Luftfahrzeug handeln. In erster Linie kommen Personenkraftfahrzeuge, Lastkraftfahrzeuge, Omnibusse, Baufahrzeuge wie Bulldozer und Bagger, und Schiffe in Betracht.

Der Verbrennungsmotor ist in den häufigsten Fällen entweder ein Otto-Motor oder ein Diesel-Motor. Der Wärmeträger ist in den meisten Fällen ein Wasser-Glykol-Gemisch, wie es üblicherweise im Kühlsystem eines Fahrzeug-Verbrennungsmotors vorhanden ist. Das Heizgerät ist vorzugsweise für Benzin oder Dieselöl als Brennstoff ausgelegt.

Die Erfindung und Ausgestaltungen der Erfindung werden nachfolgend anhand von teilweise schematisiert zeichnerisch dargestellten Ausführungsbeispielen noch näher erläutert. Es zeigt:
- Fig. 1: eine Fahrzeugheizung mit einem Wärmeträgerkreislauf erster Ausführungsform;
- Fig. 2: eine Fahrzeugheizung mit einem Wärmeträgerkreislauf zweiter Ausführungsform.

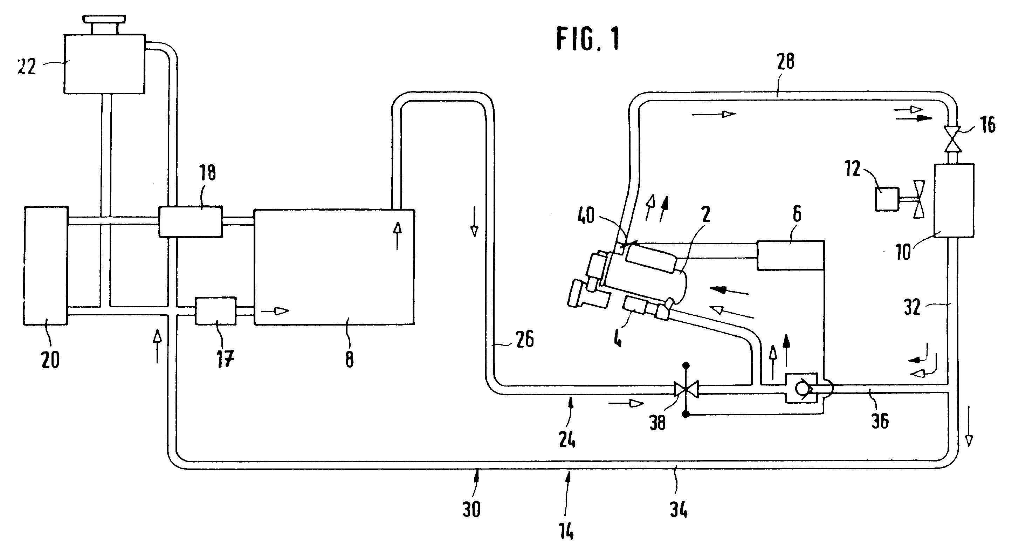

Man erkennt in Fig. 1 ein motorunabhängiges Heizgerät 2 mit integrierter Wärmeträger-Umwälzpumpe 4, ein Steuergerät 6 für das Heizgerät 2, einen Verbrennungsmotor 8, einen Heizungswärmetauscher 10 mit zugeordnetem Gebläse 12 und einen Wärmeträgerkreislauf 14, der in der Nähe des Heizungswärmetauschers 10 ein Heizungsventil 16 aufweist. Der Heizungswärmetauscher 10 ist überlicherweise im Bereich unterhalb der Frontscheibe des Fahrzeugs angeordnet und dient der Erwärmung von von außen in den Fahrzeuginnenraum transportierter Luft oder von im Fahrzeuginnenraum umgewälzter Luft. Das Heizgerät 2 kann durch Verbrennung von Brennstoff Wärme erzeugen und über einen eingebauten Wärmetauscher an den Wärmeträgerkreislauf 14 abgeben. Dem Verbrennungsmotor 8 ist in konventioneller Weise eine Kühlflüssigkeits-Umwälzpumpe 17, ein Thermostatventil 18, ein Kühler 20 und ein Ausdehnungsgefäß 22 für Kühlflüssigkeit zugeordnet. Wärmeträger und Kühlflüssigkeit sind identisch.

Der Wärmeträgerkreislauf 14 besteht im wesentlichen aus einem Vorlauf 24, der von dem Verbrennungsmotor 8 zu dem Heizungswärmetauscher 10 führt, und einem Rücklauf 30, der von dem Heizungswärmetauscher 10 zurück zu dem Verbrennungsmotor 8 führt, sowie einer weiter unten noch genauer zu beschreibenden Verbindungsleitung 36. Der Vorlauf 24 besteht aus einem ersten Teil 26 zwischen dem Verbrennungsmotor 8 und dem Heizgerät 2 sowie einem zweiten Teil 28 zwischen dem Heizgerät 2 und dem Heizungswärmetauscher 10. Der Rücklauf 30 besteht aus einem ersten Teil zwischen dem Heizungswärmetauscher 10 und der Abzweigungsstelle der Verbindungsleitung 36 sowie einem zweiten Teil 34 zwischen dieser Abzweigungsstelle und dem Verbrennungsmotor 8. Die Verbindungsleitung 36 führt von der genannten Abzweigungsstelle zu dem ersten Teil 26 des Vorlaufs 24 an einer Stelle relativ nahe dem Heizgerät 2. In der Verbindungsleitung 36 ist ein Rückschlagventil vorgesehen.

Der zweite Teil des Vorlaufs 24, der erste Teil 32 des Rücklaufs 30, die Verbindungsleitung und ein Endabschnitt des ersten Teils 26 des Vorlaufs 24 bilden einen Kurzkreislauf mit ziemlich kurzen Leitungen, der den Verbrennungsmotor 8 und die zu ihm hin bzw. von ihm fort führenden Leitungsabschnitt nicht enthält. Außerhalb dieses Kurzkreislaufs sitzt entweder im ersten Teil 26 des Vorlaufs 24 (wie eingezeichnet) oder im zweiten Teil 34 des Rücklaufs 30 ein stromlos offenes Magnetventil 38, das eine Offenstellung und eine Schließstellung hat. Die Wärmeträgerströmung in dem Kurzkreislauf ist durch Pfeile mit voll geschwärzter Spitze angedeutet.

Ein Temperaturfühler 40 sitzt am Ausgangsende des Heizgeräts 2 im Vorlauf 24.

Geöffnetes Heizungsventil 16, laufendes Gebläse 12 und eingeschaltetes Heizgerät 2 vorausgesetzt, ist die Betriebsweise der beschriebenen Fahrzeugheizung wie folgt:
Solange der Temperaturfühler 40 eine Wärmeträgertemperatur unterhalb von 90 °C feststellt, läuft das Heizgerät 2, gesteuert von dem Steuergerät 6, in der Leistungsstellung "groß". Das Magnetventil 38 ist, gesteuert von dem Steuergerät 6, stromdurchflossen und deshalb in seiner Schließstellung. In dem Kurzkreislauf kreist Wärmeträger entsprechend den Pfeilen mit voll geschwärzter Spitze, wobei die Wärmeträger-Umwälzpumpe die Wärmeträgerströmung bewirkt. In dem Heizungswärmetauscher 10 gibt der Wärmeträger je nach eingestellter Leistungsstufe des Gebläses 12 einen mehr oder weniger großen Teil seines über der Umgebungstemperatur liegenden Wärmeinhalts an die Luft ab, die in den Fahrzeuginnenraum geblasen oder in diesem umgewälzt wird. Der im restlichen Teil des Wärmeträgerkreislaufs 14 außerhalb des Kurzkreislaufs befindliche Wärmeträger strömt wegen des geschlossenen Magnetventils 38 nicht.

Wenn der Heizungswärmetauscher 10 das Wärmeangebot des durchströmenden Wärmeträgers nicht in ausreichendem Ausmaß an den Fahrzeuginnenraum abgeben kann, steigt die Wärmeträgertemperatur im Kurzkreislauf allmählich an. Wenn der Temperaturfühler 40 eine Wärmeträgertemperatur von 90 °C feststellt, schaltet das Steuergerät 6 den Strom zu dem Magnetventil 38 ab, woraufhin das Magnetventil 38 in die Offenstellung geht. Jetzt strömt Wärmeträger aus dem ersten Teil 26 des Vorlaufs 24 zumischend in den Kurzkreislauf (siehe Pfeil mit schwarz umrandeter Pfeilspitze). Der Verbrennungsmotor 8 erhält über den zweiten Teil 34 des Rücklaufs 30 warmen Wärmeträger zu seiner Vorwärmung. Sehr rasch, beispielsweise innerhalb von 15 bis 45 s, sinkt die Wärmeträgertemperatur am Temperaturfühler auf den unteren Schaltpunkt von 80 °C. In diesem Moment schaltet das Steuergerät 6 den Strom für das Magnetventil 38 ein, woraufhin das Magnetventil 38 schließt. Daraufhin schließt sich ein neuer Zyklus mit ansteigender Wärmeträgertemperatur im Kurzkreislauf an.

Der geschilderte, obere Schaltpunkt von 90 °C des Steuergeräts kann allein zum Umschalten des Magnetventils 38 dienen. Er kann aber auch zugleich zum Umschalten des Heizgeräts 2 von der Stellung "große Leistung" auf die Stellung "kleine Leistung" dienen. In diesem Fall schaltet das Steuergerät 6 bei Erreichen des unteren Schaltpunkts von 80 °C wieder zurück auf die Stellung "große Leistung". Alternativ kann das Steuergerät 6 einen bei 95 °C liegenden, dritten Schaltpunkt zur Umschaltung von "großer Leistung" auf "kleine Leistung" des Heizgeräts 2 aufweisen.

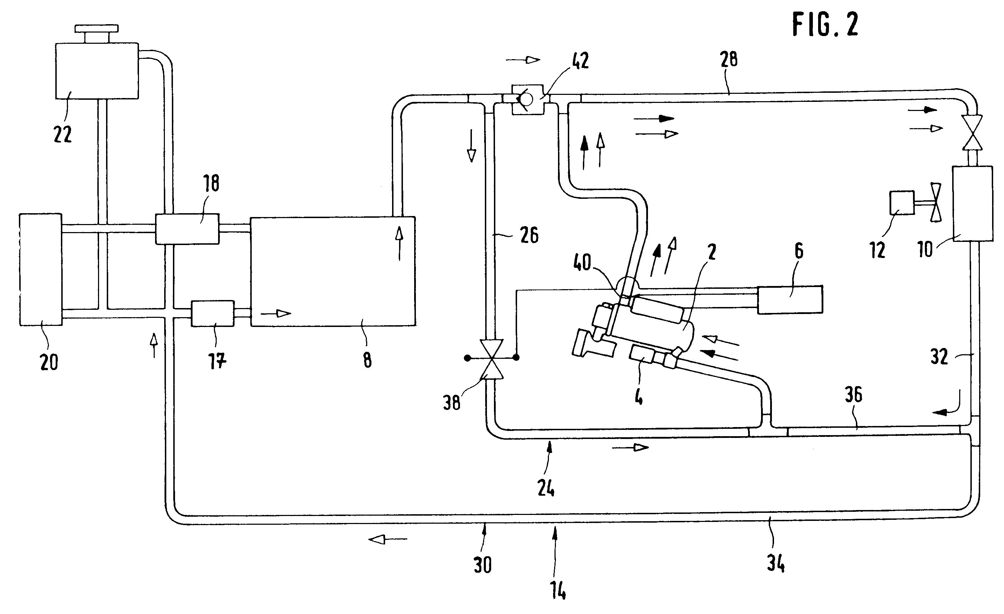

Die in Fig. 2 gezeichnete Fahrzeugheizung bzw. deren Wärmeträgerkreislauf 14 unterscheidet sich vom Ausführungsbeispiel gemäß Fig. 1 lediglich dadurch, daß der Vorlauf 24 eine Bypassleitung 42 mit einem Rückschlagventil aufweist, die von einer mittleren Stelle des ersten Teil 26 des Vorlaufs 24 zu einer mittleren Stelle des zweiten Teils 28 des Vorlaufs 24 führt. Außerdem ist in der Verbindungsleitung 36 kein Rückschlagventil vorhanden. Schließlich ist das Magnetventil 38 ein stromlos geschlossenes Ventil. Der vorstehend beschriebene Funktionsablauf bleibt der gleiche, wobei das Magnetventil 38 lediglich zum Öffnen statt zum Schließen Strom von dem Steuergerät 6 erhalten muß.

Die Bypassleitung 42 bleibt bei nicht laufendem Verbrennungsmotor 8 undurchströmt, da das darin befindliche Rückschlagventil unter dem Druck im zweiten Teil 28 des Vorlaufs 24, der auf der Druckseite der Wärmeträger-Umwälzpumpe 4 liegt, geschlossen bleibt.

Die vorstehenden Funktionsbeschreibungen betrafen den Fall, daß der Verbrennungsmotor 8 stillsteht. Wenn der Verbrennungsmotor 8 und damit seine Kühlflüssigkeitspumpe 17 läuft, kann entweder das Heizgerät 2 außer Betrieb sein. Dann ist bei der Ausführungsform gemäß Fig. 1 das Magnetventil 38 offen. Das Rückschlagventil in der Verbindungsleitung 36 bleibt geschlossen, weil es unter dem Druck im ersten Teil 26 des Vorlaufs 24, der auf der Druckseite der Umwälzpumpe 17 liegt, steht. Die Kühlflüssigkeit bzw. der Wärmeträger durchströmt das abgeschaltete Heizgerät 2 und strömt durch den Heizungswärmetauscher 10, sofern das Heizungsventil 16 offen ist. Bei der Ausführungsform gemäß Fig. 2 ist das Magnetventil 38 geschlossen. Der von dem Verbrennungsmotor 8 kommende Wärmeträger strömt durch die Bypassleitung 42 und gelangt so zu dem Heizungswärmetauscher 10, sofern das Heizungsventil 16 geöffnet ist.

Oder das Heizgerät 2 ist als Zusatzheizung in Betrieb. Dann wird bei der Ausführungsform gemäß Fig. 1 der Wärmeträger im Heizgerät 2 zusätzlich aufgeheizt, wobei das Steuergerät 6 dafür sorgt, daß das Magnetventil 38 stets offen ist. Bei der Ausführungsform gemäß Fig. 2 zweigt sich der Wärmeträger im Vorlauf 24 zwischen der Bypassleitung 42 und dem durch das Heizgerät 2 führenden Teil des Vorlaufs 24 auf. Der durch das Heizgerät 2 strömende Teil des Vorlauf-Wärmeträgers wird dort zusätzlich erwärmt. Das Steuergerät 6 sorgt dafür, daß das Magnetventil 38 offen bleibt.

Bei stehendem Verbrennungsmotor 8 sind die Strömungswiderstände in dem außerhalb des Kurzkreislaufs befindlichen Teil des Wärmeträgerkreislaufs so groß, daß der durch den Verbrennungsmotor 8 strömende Wärmeträgeranteil kleiner als der im Kurzkreislauf kreisende Wärmeträgeranteil ist.

Bestehende Wärmeträgerkreisläufe von Fahrzeugen lassen sich sehr einfach auf erfindungsgemäße Wärmeträgerkreisläufe und ein motorunabhängiges Heizgerät 2 umrüsten.

## Patentansprüche

1. Fahrzeugheizung, aufweisend:
(a) ein Heizgerät (2), das durch Verbrennung von Brennstoff Wärme erzeugen und an einen flüssigen Wärmeträger abgeben kann;
(b) einen Wärmeträgerkreislauf (14) mit:
- einem Vorlauf (24), der von einem Antriebs-Verbrennungsmotor (8) des Fahrzeugs zu dem Heizgerät (2) und von dort zu einem Heizungswärmetauscher (10) für den Fahrzeuginnenraum führt; und
- einem Rücklauf (30), der von dem Heizungswärmetauscher (10) zu dem Verbrennungsmotor (8) führt, wobei
(c) der Wärmeträgerkreislauf (14) eine Verbindungsleitung (36) aufweist, die von dem Rücklauf (30) zu dem zwischen dem Verbrennungsmotor (8) und dem Heizgerät (2) befindlichen, ersten Teil (26) des Vorlaufs (24) führt, so daß ein Kurzkreislauf gebildet ist, der unter Ausschluß des Verbrennungsmotors (8) durch das Heizgerät (2) und den Heizungswärmetauscher (10) führt, und wobei
(d) für den ersten Teil (26) des Vorlaufs (24) oder den zweiten Teil (34) des Rücklaufs (30), der sich zwischen der Abzweigung der Verbindungsleitung (36) und dem Verbrennungsmotor (8) befindet, ein strombetätigtes Ventil (38) vorgesehen ist,
dadurch gekennzeichnet,
(e) daß für das Heizgerät (2) ein Steuergerät (6) vorgesehen ist, das den Betrieb des Heizgeräts (2) unter Berücksichtigung der im Wärmeträgerkreislauf hinter dem Heizgerät (2) erfaßten Wärmeträgertemperatur steuert; und
(f) daß das strombetätigte Ventil (38) durch das Steuergerät (6) gesteuert ist.

2. Fahrzeugheizung nach Anspruch 1, dadurch gekennzeichnet, daß das strombetätigte Ventil (38) ein Magnetventil ist.

3. Fahrzeugheizung nach einem der Ansprüche 1 oder 2, dadurch gekennzeichnet, daß das strombetätigte Ventil (38) ein Ventil mit zwei Stellungen, nämlich einer Offenstellung und einer Schließstellung ist.

4. Fahrzeugheizung nach einem der Ansprüche 1 bis 3, dadurch gekennzeichnet, daß das Heizgerät (2) einen Temperaturfühler (40) für den abgehenden Wärmeträger aufweist.

5. Fahrzeugheizung nach einem der Ansprüche 1 bis 4, dadurch gekennzeichnet, daß das Steuergerät (6) mindestens einen unteren, ersten Temperatur-Schaltpunkt und einen oberen, zweiten Temperatur-Schaltpunkt aufweist, wobei das strombetätigte Ventil (38) am ersten Schaltpunkt geschlossen und am zweiten Schaltpunkt geöffnet wird.

6. Fahrzeugheizung nach Anspruch 5, dadurch gekennzeichnet, daß das Steuergerät (6) so ausgelegt ist, daß es am zweiten Schaltpunkt oder an einem höheren, dritten Temperatur-Schaltpunkt das Heizgerät (2) auf geringere Wärmeerzeugung umschaltet.

7. Fahrzeugheizung nach Anspruch 5 oder 6, dadurch gekennzeichnet, daß der erste Schaltpunkt einer Temperatur in einem Bereich von 67 bis 83 °C und der zweite Schaltpunkt einer Temperatur in dem Bereich von 77 bis 93 °C entspricht.

8. Fahrzeugheizung nach einem der Ansprüche 1 bis 7, dadurch gekennzeichnet, daß die Gebläsestufe eines dem Heizungswärmetauscher (10) zugeordneten Gebläses (12) und/oder die Stellung des strombetätigten Ventils (38) in Abhängigkeit von der über einen Temperaturfühler erfaßten Temperatur des Fahrzeuginnenraums gesteuert wird.

9. Fahrzeugheizung nach einem der Ansprüche 1 bis 8, dadurch gekennzeichnet, daß dei Gebläsestufe eines dem Heizungswärmetauscher (10) zugeordneten Gebläses (12) und/oder die Stellung des strombetätigten Ventils (38) von einer Zeitschaltuhr gesteuert wird.

## Claims

1. Vehicle heating system, having:
(a) a heating device (2) which can generate heat by the combustion of fuel and can emit it to a liquid heat carrier;
(b) a heat carrier circuit (14) with:
- an outflow line (24) which leads from a driving internal combustion engine (8) of the vehicle to the heating device (2) and from there to a heating system heat exchanger (10) for the vehicle interior; and
- a return line (30) which leads from the heating system heat exchanger (10) to the internal combustion engine (8),
(c) the heat carrier circuit (14) having a connection line (36) which leads from the return line (30) to the first part (26) of the outflow line (24), which is located between the internal combustion engine (8) and the heating device (2), so that there is formed a short circuit which leads through the heating device (2) and the heating system heat exchanger (10) while excluding the internal combustion engine (8), and
(d) a current-activated valve (38) being provided for the first part (26) of the outflow line (24) or the second part (34) of the return line (30), which is located between the branching point of the connection line (36) and the internal combustion engine (8),
characterized
(e) in that there is provided for the heating device (2) a control device (6) which controls the operation of the heating device (2) while taking into account the heat carrier temperature detected in the heat carrier circuit downstream of the heating device (2); and
(f) in that the current-activated valve (38) is controlled by the control device (6).

2. Vehicle heating system according to Claim 1, characterized in that the current-activated valve (38) is a solenoid valve.

3. Vehicle heating system according to one of Claims 1 or 2, characterized in that the current-activated valve (38) is a valve having two positions, namely an open position and a closed position.

4. Vehicle heating system according to one of Claims 1 to 3, characterized in that the heating device (2) has a temperature sensor (40) for the outgoing heat carrier.

5. Vehicle heating system according to one of Claims 1 to 4, characterized in that the control device (6) has at least one lower, first temperature switching point and an upper, second temperature switching point, the current-activated valve (38) being closed at the first switching point and being opened at the second switching point.

6. Vehicle heating system according to Claim 5, characterized in that the control device (6) is designed such that it switches over the heating device (2) to lower heat generation at the second switching point or at a higher, third temperature switching point.

7. Vehicle heating system according to Claim 5 or 6, characterized in that the first switching point corresponds to a temperature in a range from 67 to 83°C and the second switching point corresponds to a temperature in the range from 77 to 93°C.

8. Vehicle heating system according to one of Claims 1 to 7, characterized in that the fan level of a fan (12) associated with the heating system heat exchanger (10) and/or the position of the current-activated valve (38) is/are controlled as a function of the temperature of the vehicle interior detected by way of a temperature sensor.

9. Vehicle heating system according to one of Claims 1 to 8, characterized in that the fan level of a fan (12) associated with the heating system heat exchanger (10) and/or the position of the current-activated valve (38) is/are controlled by a time switch.

## Revendications

1. Chauffage pour véhicule présentant :
(a) un appareil de chauffage (2) qui peut produire de la chaleur par la combustion d'un combustible et la délivrer à un agent caloporteur liquide ;
(b) un circuit de circulation de l'agent caloporteur (14) comportant :
- une conduite aller (24) qui mène d'un moteur de commande à combustion interne (8) du véhicule à l'appareil de chauffage (2), puis à un échangeur de chaleur du chauffage (10) pour l'habitacle du véhicule, et
- une conduite retour (30) qui va de l'échangeur de chaleur du chauffage (10) au moteur à combustion interne (8), sachant que
(c) le circuit de circulation de l'agent caloporteur (14) présente une conduite de jonction (36) qui mène de la conduite retour (30) à la première partie (26) de la conduite aller (24) située entre le moteur à combustion interne (8) et l'appareil de chauffage (2), de manière à former un petit circuit de circulation qui traverse à l'exclusion du moteur à combustion interne (8) l'appareil de chauffage (2) et l'échangeur de chaleur du chauffage (10), et sachant que
(d) une vanne (38) actionnée par le courant est prévue pour la première partie (26) de la conduite aller (24) ou la deuxième partie (34) de la conduite retour (30), laquelle se trouve entre la bifurcation de la conduite de jonction (36) et le moteur à combustion interne (8),
caractérisé en ce que
(e) un appareil de commande (6) qui commande le fonctionnement de l'appareil de chauffage (2) en tenant compte de la température de l'agent caloporteur qui est mesurée dans le circuit de circulation de l'agent caloporteur derrière l'appareil de chauffage (2) est prévu pour l'appareil de chauffage (2), et
(f) en ce que la vanne (38) actionnée par le courant est commandée par l'appareil de commande (6).

2. Chauffage pour véhicule selon la revendication 1, caractérisé en ce que la vanne (38) actionnée par le courant est une électrovanne.

3. Chauffage pour véhicule selon l'une des revendications 1 ou 2, caractérisé en ce que la vanne (38) actionnée par le courant est une vanne à deux positions, à savoir une position ouverte et une position fermée.

4. Chauffage pour véhicule selon l'une des revendications 1 à 3, caractérisé en ce que l'appareil de chauffage (2) présente un capteur de température (40) pour l'agent caloporteur qui en sort.

5. Chauffage pour véhicule selon l'une des revendications 1 à 4, caractérisé en ce que l'appareil de commande (6) présente au moins un premier seuil inférieur de température et un deuxième seuil supérieur de température, sachant que la vanne (38) actionnée par le courant est fermée au premier seuil et ouverte au deuxième seuil.

6. Chauffage pour véhicule selon la revendication 5, caractérisé en ce que l'appareil de commande (6) est conçu de telle manière qu'il commute l'appareil de chauffage (2) au deuxième seuil ou à un troisième seuil encore plus élevé pour que celui-ci produise moins de chaleur.

7. Chauffage pour véhicule selon la revendication 5 ou 6, caractérisé en ce que le premier seuil correspond à une température de l'ordre de 67 à 83° C et le deuxième seuil à une température comprise entre 77 à 93° C.

8. Chauffage pour véhicule selon l'une des revendications 1 à 7, caractérisé en ce que la vitesse d'un ventilateur (12) associé à l'échangeur de chaleur du chauffage (10) et/ou la position de la vanne (38) actionnée par le courant est commandée par la température de l'habitacle du véhicule qui est captée par un capteur de température.

9. Chauffage pour véhicule selon l'une des revendications 1 à 8, caractérisé en ce que la vitesse d'un ventilateur (12) associé à l'échangeur de chaleur du chauffage (10) et/ou la position de la vanne (38) actionnée par le courant est commandée par une minuterie.
